# EUROPEAN PATENT SPECIFICATION

(11) **EP 3 822 946 B1**
(45) Date of publication and mention of the grant of the patent: **03.08.2022**
(21) Application number: 19208877.1
(22) Date of filing: 13.11.2019
(51) Int. Cl.: G08G 1/16

(54) **CONTROL OF AN AT LEAST PARTLY AUTOMATED VEHICLE**
STEUERUNG VON EINEM ZUMINDEST TEILWEISE AUTOMATISIERTEN FAHRZEUG
COMMANDE D'UN VÉHICULE AU MOINS PARTIELLEMENT AUTOMATISÉ

(43) Date of publication of application: 19.05.2021
(73) Proprietor: Volkswagen AG, 38440 Wolfsburg (DE)
(72) Inventor: Pfadler, Andreas, 13359 Berlin (DE); Jornod, Guillaume, 10245 Berlin (DE)

(56) References cited:
- US-A1- 2019 179 304

## Description

The invention relates to a method for controlling an at least partly automated vehicle, wherein a vehicle computing system of the vehicle is used to generate an environmental model, wherein the environmental model contains an entry for an object in an environment of the vehicle, the entry including a position of the object. The invention further relates to a method for supporting a control of an at least partly automated vehicle using a remote computing unit, to an electronic vehicle guidance system, to a vehicle support system and to a computer program product.

According to teleoperated driving, ToD, partly or fully automated vehicles may be remotely controlled from a control center, in particular by a human operator, in case the vehicle encounters an uninterpretable situation, for example, in case an object blocking the path for the vehicle. The control center, in particular the operator, can then take over control over the vehicle via a radio communication network, as for example, 5G or 4G, and navigate the vehicle to manage the current situation.

Consequently, ToD requires a significant amount of resources including band width of the radio network and, for example, human resources.

Document US 2019/0011912 A1 describes various interactions between a teleoperation system and a vehicle. For example, a driverless vehicle may send a proposed maneuver and/or action to a teleoperator and the teleoperator may confirm or reject the proposal.

Document US 2019/0179304 A1 describes a method for supervisory control of a vehicle, wherein a computer system of the vehicle carries out a world model process to characterize the vehicle in its environment, wherein the world model includes positions of moving objects or obstacles. The computer system carries out a pruning process, which takes a feasible trajectory set as an input and eliminates from further analysis any trajectory that is determined to be in collision with an object or obstacle identified in the world model. A supervisory command is received from an operator located inside the vehicle or at a remote location and a control process carried out by the computer system generates a sequence of control actions to guide the vehicle.

It is therefore an object of the present invention to provide an improved concept for the control of an at least partly automated vehicle, which reduces the required resources, for example in situations that may not reliably be interpreted by the vehicle itself.

This objective is achieved by the subject-matter of the independent claims. Further implementations and preferred embodiments are subject-matter of the dependent claims.

The improved concept is based on the idea that the vehicle modifies an environmental model of its environment and proposes a path based on the modified environmental model. A remote computing unit can, in response to the proposal, provide information regarding a selected path to the vehicle.

According to the improved concept, a method, in particular a computer implemented method, for controlling an at least partly automated vehicle is provided. A vehicle computing system of the vehicle is used to generate an environmental model. The environmental model contains an entry for an object in an environment of the vehicle, the entry including a position of the object. The vehicle computing system is used to modify the entry for the object to generate a modified environmental model. The vehicle computing system is used to generate at least one proposed path for the vehicle, based on the modified environmental model and transmit the at least one proposed path, in particular data containing and/or concerning the at least one proposed path, to a remote computing unit, in particular via a communication interface of the vehicle or of the vehicle computing system, and, in particular via a communication network. The vehicle computing system is used to receive information concerning a selected path of the at least one proposed path from the remote computing unit and to control the vehicle, in particular at least in part automatically, to drive along the selected path.

The environmental model (German: "Umfeldmodell") comprises a list with entries, wherein each entry corresponds to an object in an environment of the vehicle. Apart from the position of the respective object, the entry for the respective object may optionally comprise further information regarding the object.

The further information can, for example, comprise information regarding a dynamics of the object, for example, a velocity or a relative velocity with respect to the vehicle, a direction of movement, in particular relative to the vehicle, a distance to the vehicle and so forth. Optionally, the entry can further comprise a class or type of the respective object.

The entry can optionally comprise a probability for a further quantity or parameter of the entry being correct or a respective misinterpretation probability for the quantity or parameter, for example, for the type of object.

The environmental model may be generated by the vehicle computing system based on the sensor data generated by one or more sensor systems of the vehicle and/or by information received via vehicle-to-vehicle, V2V, communication from further vehicles in the environment and/or by or vehicle-to-anything, V2X, communication from other entities. In particular, the environmental model may be generated by the vehicle computing system based on a collective perception of the vehicle and the further vehicles.

The sensor data may, for example, comprise camera or video data, ultrasonic data, GPS data, lidar data, radar data, odometric data, and so forth.

The position of the object may, for example, be given in a local coordinate system of the vehicle.

The vehicle computing system can contain one or more computation units or control units. For example, a control unit, for example, electronic control unit, ECU, of the computing system can be dedicated for controlling the vehicle to drive along the selected path.

The object can be any type of object in the environment. For example, the object can be a static or dynamic object. In particular, the object can comprise a vehicle, for example, a driving or a parking vehicle, a pedestrian or another person or animal. The object can also comprise a construction site, a building, traffic lights and so forth. The object can also comprise a road boundary, a pavement, a tree, a road marking and so forth. The object can also comprise waste or a stain on the road.

The remote computing unit can be implemented as or comprise a server computer at a control center, in particular, a control center for teleoperated driving of the vehicle.

For example, a human operator of the control center or of the remote computing unit, may select one of the proposed paths and, for example, generate an input to the remote computing unit representing the selection. The remote computing unit can, for example, generate the information concerning the selected path based on the input and transmit it to the vehicle computing system, in particular, via the communication network.

The information concerning the selected path may, in particular, comprise the information that one of the proposed paths has been selected and, which one of the proposed paths has been selected.

The information regarding the selected path can also comprise the information that none of the selected paths has been selected. In this case, the vehicle may, for example, hand over control to the control center to initiate a teleoperation by the operator.

The vehicle computing system is used to transmit the environmental model, which may also be denoted as original environmental model as opposed to the modified environmental model, to the remote computing unit, for example together with the at least one proposed path.

A first path of the at least one proposed path interferes with the object according to the environmental model. The first path does not interfere with the object according to the modified environmental model.

In particular, the vehicle computation unit is used to generate the first path such that it interferes with the object according to the environmental model and to modify the environmental model such that the first path does not interfere with the object according to the modified environmental model.

In other words, the vehicle computation unit may predict a high probability for a collision of the vehicle with the object, in case the vehicle follows the first path. In other words, the first path may seem impossible or not allowed for the vehicle.

The modification of the environmental model corresponds, in particular, to ignoring the object.

Thus, apparently impossible or dangerous paths are taken into account for proposing the at least one proposed path. In fact, such a path may be unproblematic under certain conditions. The operator may recognize this and select the respective path.

According to the method for controlling for the at least partially automated vehicle according to the improved concept, it can be avoided with a higher probability that, in a situation that is not interpretable by the vehicle, control of the vehicle has to be handed over completely to the teleoperation control center or to a driver of the vehicle. Therefore, resources, such as human resources, for example the availability of the operator, or network resources, such as available or required band width for transmitting information for teleoperation between the vehicle and the control center, may be reduced or saved.

In other words, if an obstacle or any other situation would normally trigger a teleoperation session, the vehicle may instead propose a seemingly impossible or not allowed action and the control center may allow this in certain cases. A regular teleoperation session is not initiated in this case.

In particular, by using the modified environmental model for generating the proposed path, the potential number of paths from which the operator can select, may be enhanced, since even such paths, which seem impossible due to the object according to the original environmental model, may, in some cases, be in fact possible and may be automatically driven by the vehicle. Such decisions, however, have to be made by the human operator, in order to guarantee the required safety and security.

According to several implementations, the vehicle is designed as a vehicle according to level 4 or level 5, preferably level 5, according to the SAE J3016 classification dated June 2018.

According to several implementations of the method, modifying the entry for the object includes modifying the position of the object, deleting the entry of the object or deleting a part of the entry of the object or labelling the entry, in particular, to highlight that the entry should be ignored or was ignored for generating the proposed path.

The control center, in particular the operator, can then select one of the at least one selected path based on the environmental model. In particular, the original environmental model renders it comprehensible for the operator, why the vehicle considers the situation as not interpretable. For example, it may be comprehensible for the operator, of which type the object is and, depending thereupon, decide to ignore the object and the potential collision between the object and the vehicle.

According to several implementations, the vehicle computing system is used to transmit the modified environmental model to the remote computing unit.

According to several implementations, the entry for the object contains the type of the object.

The vehicle computing system can, for example, classify the object according to the sensor data and store the type of the object depending on a result of the classification in the entry.

According to several implementations, the entry for the object comprises a misinterpretation probability for the object. The misinterpretation probability is a probability for a misinterpretation of the type of the object.

According to several implementations, the vehicle computing system is used to transmit the type of the object and/or the misinterpretation probability to the remote computing unit.

In this way, the operator can decide which of the proposed paths to select based on the type of the object and based on the misinterpretation probability, if applicable.

For example, the operator may chose to ignore an object with a relatively low misinterpretation probability, if the type of the object is such that an interference of the respective path with the object, in particular a potential collision, is acceptable.

This may, for example, be the case if the object corresponds to an object that can be safely run over or has a relatively small size, such as a stain on the road, small pieces of waste or the like. It may also be acceptable, for example, to cross an object representing a road marking or drive on a hard shoulder of the road.

On the other hand, it may, for example, not be acceptable to ignore objects corresponding to further vehicles or pedestrians.

According to several implementations, a second path of the at least one proposed path is prohibited according to a predefined set of traffic rules.

The operator of the control center may, for example, decide that, under certain conditions, the traffic rule can be broken, for example in a defined or controllable manner. This may, for example, correspond to situations where the path temporarily enters a sidewalk next to the road. Since the operator may have access to the original environmental model, it may be decided whether breaking the traffic rules is acceptable on a case to case basis.

According to several implementations, the vehicle computation unit is used to remove or delete the entry of the object, in particular, from the environmental model, to generate the modified environmental model, in particular, to modify the entry and therefore generate the modified environmental model.

By explicitly ignoring the object in this way, apparently impossible paths may be proposed.

According to several implementations, an environmental sensor system of the vehicle is used to generate sensor data and the vehicle computation unit is used to generate the environmental model based on the sensor data.

An environmental sensor system can be understood as a sensor system or a combination of two or more sensor systems, which may individually or in combination generate the sensor data such that it depicts or represents the environment of the vehicle.

In particular, the environmental sensor system may comprise a camera system, a lidar system, a radar system and/or an ultrasonic sensor system.

According to several implementations, the vehicle computation unit is used to receive, in particular via V2V and/or via vehicle-to-infrastructure, further sensor data from one or more further vehicles, in particular further vehicles in the environment, and to generate the environmental model based on the further sensor data.

The further sensor data are, in particular, generated by means of respective further environmental sensor systems of the further vehicles.

In this way, a maximum amount of information may be used for generating the environmental model. Therefore, the quality of the environmental model may be increased. In consequence, an improved basis for selection of a path may be provided to the operator.

According to the improved concept, also a method, in particular a computer implemented method, for supporting a control of an at least partly automated vehicle is provided. A remote computing unit is used to receive an environmental model from a vehicle computing system of the vehicle, the environmental model containing an entry for an object in an environment of the vehicle, the entry including a position of the object. The remote computing unit is used to receive at least one proposed path for the vehicle, in particular data containing or concerning the at least one proposed path, from the vehicle computing system, in particular via a communication network and a communication interface of the remote computing unit. The at least one proposed path is based on a modified environmental model, wherein the entry for the object in the modified environmental model is modified as compared to the environmental model, wherein the first path (8) of the at least one proposed path interferes with the object according to the original environmental model and a first path does not interfere with the object according to the modified environmental model. The remote computing unit is used to generate information concerning a selected path of the at least one proposed path and transmit the information to the vehicle computing system.

The information concerning the selected path may, as described above, for example be generated by the remote computing unit based on an input of an operator of the remote computing unit.

In particular, the selection is carried out by the operator based on the at least one proposed path and the environmental model.

According to several implementations, the remote computing unit is used to receive the modified environmental model from the vehicle computing system.

Further implementations of the method for supporting a control of the at least partly automated vehicle according to the improved concept follow directly from the various implementations of the method for controlling an at least partly automated vehicle and vice versa.

According to several implementations of a method for controlling an at least partly automated vehicle according to the improved concept, the control is supported according to a method for supporting a control of an at least partly automated vehicle according to the improved concept.

In particular, the environmental model is generated and modified by the vehicle computing system as described above and the at least one proposed path is generated and transmitted to the remote computing unit by the vehicle computing system as described above. Furthermore, the environmental model is transmitted by the vehicle computing system to the remote computing unit. Then, the remote computing unit receives the environmental model and the at least one proposed path as described above, generates the information concerning the selected path and transmits the information to the vehicle computing system. Then, the vehicle computing system receives the information concerning the selected path and controls the vehicle to drive along the selected path as described above.

According to the improved concept, an electronic vehicle guidance system for an at least partly automated vehicle is provided. The vehicle guidance system comprises a vehicle computing system, which is configured to generate an environmental model, wherein the environmental model contains an entry for an object in an environment of the vehicle, the entry including a position of the object. The vehicle computing system is configured to modify the entry for the object to generate a modified environmental model and to generate at least one proposed path for the vehicle based on the modified environmental model, wherein a first path of the at least one proposed path interferes with the object according to the original environmental model and the first path does not interfere with the object according to the modified environmental model. The vehicle computing system is configured to transmit the at least one proposed path to a remote computing unit, in particular via a communication interface of the vehicle or of the vehicle guidance system, to receive information concerning a selected path of the at least one proposed path from the remote computing unit and to control the vehicle, in particular, at least in part automatically to drive along the selected path.

An electronic vehicle guidance system may be understood as an electronic system, configured to guide a vehicle fully automatically or fully autonomously and, in particular, without a manual intervention or control by a driver or user of the vehicle being necessary. The vehicle conducts required steering maneuvers, braking maneuvers and/or acceleration maneuvers and so forth automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Further implementations of the electronic vehicle guidance system follow directly from the various implementations of the methods according to the improved concept and vice versa, respectively. In particular, an electronic vehicle guidance system according to the improved concept may be configured to or programmed to carry out a method for controlling an at least partly automated vehicle according to the improved concept or the vehicle guidance system carries out such a method.

According to the improved concept, a system comprising an electronic vehicle guidance system according to the improved concept and a vehicle support system for supporting a control of an at least partly automated vehicle is provided, wherein the support system comprises a remote computing unit. The remote computing unit is configured to receive the environmental model from the vehicle computing system of the vehicle. The remote computing unit is configured to receive the at least one proposed path for the vehicle from the vehicle computing system. The remote computing unit is configured to generate the information concerning the selected path of the at least one proposed path and transmit the information to the vehicle computing system.

According to the improved concept, a vehicle comprising an electronic vehicle guidance system according to the improved concept is provided.

According to the improved concept, a computer program comprising instructions is provided.

According to several implementations of the computer program, when the computer program or the instructions are executed by a computer system, in particular by an electronic vehicle guidance system according to the improved concept, for example by the vehicle computing system of the electronic vehicle guidance system, the instructions cause the computer system to carry out a method for controlling an at least partly automated vehicle according to the improved concept.

According to several implementations of the computer program, when the instructions are executed by a computer system, for example by a vehicle support system according to the improved concept, in particular by the remote computing unit of the vehicle support system, the instructions cause the computer system to carry out a method for supporting a control of an at least partly automated vehicle according to the improved concept.

According to several implementations, a computer readable storage medium is provided, the storage medium storing a computer program according to the improved concept.

The computer program and the computer readable storage medium according to the improved concept can be considered as computer program products, respectively.

The invention also comprises the combination of features of the described implementations.

In the following, exemplary implementations of the invention are described. Therein,
- Fig. 1: shows schematically an electronic vehicle guidance system and a vehicle support system according to respective exemplary implementations according to the improved concept; and
- Fig. 2: shows a flow diagram of an exemplary implementation of a method for controlling an at least partly automated vehicle according to the improved concept.

The exemplary implementations described in the following represent preferred embodiments of the inventions. In the embodiment, the described components represent individual and independent features of the invention, respectively, which may characterize the invention independent of each other and, consequently, are to be considered as part of the invention also in combinations deviating from the described combinations. Furthermore, the described implementations are extendable by means of further features described above.

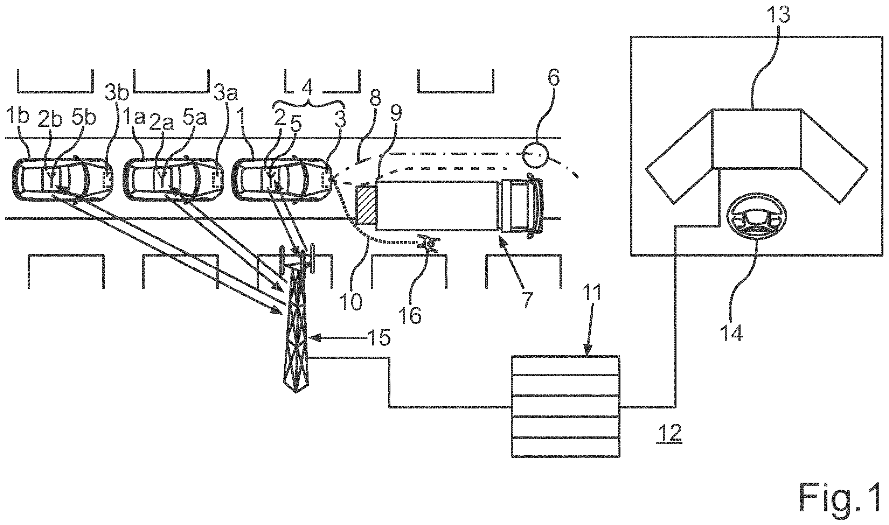

In Fig. 1, a traffic scenario involving an automated vehicle 1 comprising an exemplary implementation of an electronic vehicle guidance system 4 is shown.

The vehicle guidance system 4 comprises an environmental sensor system 3, which may, for example, contain one or more cameras, lidar sensors, radar sensors and/or ultrasonic sensors.

The vehicle guidance system 4 further comprises a computing system 2 coupled to the environmental sensor system 3, in particular, to receive sensor data generated by the environmental sensor system 3.

The vehicle 1, in particular the vehicle guidance system 4, for example the computing system 2, comprises a communication interface 5 for communicating via a communication network, in particular, a cellular network or radio network, with a network node 15. Via the network and the network node 15, the communication interface 5 can communicate with a remote server computer 11 of an exemplary implementation of a vehicle support system 12 according to the improved concept.

Fig. 1 also shows further vehicles 1a, 1b, which may, for example, also be designed as automated vehicles.

The further vehicles 1a, 1b may, for example, each comprise respective further environmental sensor systems 3a, 3b, respective further communication interfaces 5a, 5b and respective further computing systems 2a, 2b.

The further computing systems 2a, 2b may receive respective further sensor data by the further environmental sensor systems 3a, 3b and the further communication interfaces 5a, 5b may be configured to communicate directly via V2V with the communication interface 5 and/or via the network with the network node 15.

The vehicle support system 12 may, for example, be part of a control center for teleoperated driving with a display device 13 to provide and display information or data sent by the vehicle 1 to the remote server 11 to an operator of the control center.

In Fig. 1 a first object 6 on a road in front of the vehicle 1 is indicated, as well as a second object 7 and a third object 16 in front of the vehicle 1.

The first object 6 may, for example, be a stain on the road or a small piece of waste. The second object 7 may, for example, be a parking truck or a construction site. The third object 16 may, for example, be a pedestrian.

According to a known approach, the presence of the second object 7, which may for example be prevent the vehicle 1 from continuing its regular automated driving, the vehicle 1 could trigger a teleoperation session, wherein the operator of the control center controls the vehicle 1 remotely to resolve the situation. According to the improved concept, however, handing over the full control to the operator may be avoided.

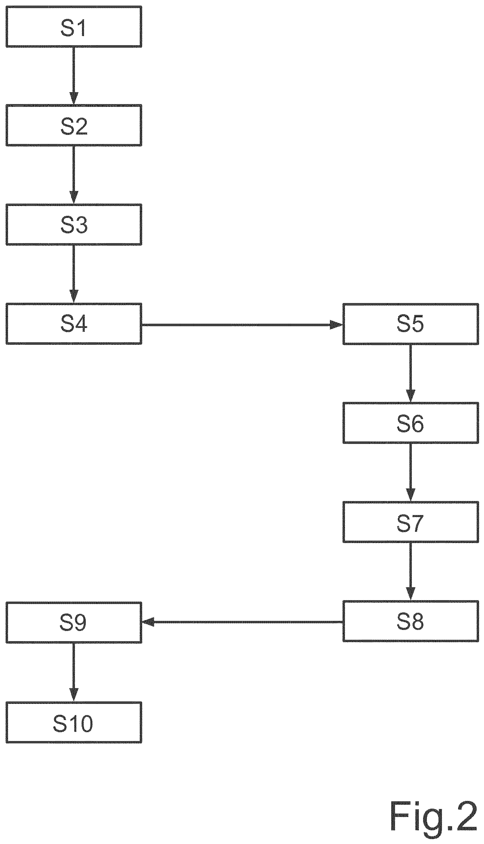

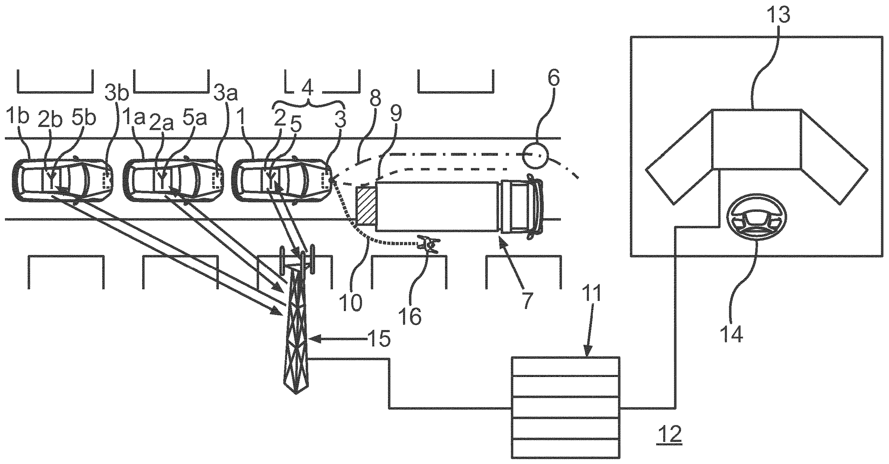

The function of the electronic vehicle guidance system 4 and of the vehicle support system 12 is described in more detail with respect to an exemplary implementation of a method for controlling an at least partly automated vehicle according to the improved concept. A flow diagram of such a method is depicted in Fig. 2.

The method for controlling the at least one partly automated vehicle comprises method steps S1 to S10. Therein, method steps S5 to S8 may correspond to an exemplary implementation of a method for supporting a control of an at least partly automated vehicle according to the improved concept.

In step S1 of the method, the environmental sensor system 3 may generate the sensor data depicting the environment of the vehicle 1 and, optionally, the further environmental sensor systems 3a, 3b may generate respective further sensor data depicting respective further environments of the further vehicles 1a, 1b.

The computing system 2 may receive the sensor data and, for example, the further sensor data, in particular via V2V.

The computing system 2 generates, based on the sensor data and optionally based on the further sensor data, an environmental model describing the environment of the vehicle 1. The environmental model comprises, for example, a respective entry for each object detected based on the sensor data and/or the further sensor data. In particular, the environmental model may comprise a respective type of the object and a respective position of the object for each object.

Optionally, the entry for each object comprises a misinterpretation probability concerning the probability that the type of the object is not correctly identified.

Furthermore, the entries can, optionally, comprise information regarding the dynamics of the respective object or further information.

In the exemplary situation of Fig. 1, the environmental model may comprise an entry for the first object 6, the second object 7 and the third object 16.

In the situation shown in Fig. 1, the vehicle 1 may, for example, not be able to continue the fully automated driving, since each of the possible paths 8, 9, 10 planed by the computing system 2, interferes with one of the objects 6, 7, 16.

Therefore, in step S2, the computing system 2 generates a modified environmental model based on the environmental model by removing one or more objects 6, 7, 16 from the list of entries.

Then, in step S3 of the method, the computing system 2 may generate a plurality of proposed paths 8, 9, 10.

For example, a first path 8 may be interfering with the first object 6 according to the environmental model, but may be not interfering with the first object 6 according to a first modified environmental model, wherein the first object 6 has been removed.

Analogously, the second path 9 may interfere with the second object 7 according to the environmental model and may, for example, not interfere with the second object 7 according to the first modified environmental model or a second modified environmental model, where the second object 7 is removed.

In the same way, the third path 10 may interfere with the third object 16 according to the environmental model and may, for example, not interfere with the third object 16 according to the first modified environmental model or a third environmental model, wherein the third object 16 is removed.

In the situation of Fig. 1, the type of the objects 6, 7, 16 may, for example, correspond to a stain on the road in case of the first object 6, to a parking truck in case of the second object 7 and to a pedestrian in case of the third object 16.

For example, respective misinterpretation probabilities may be significantly higher for the second and third object 7, 16 than for the first object 6. For example, the misinterpretation probability for the first object 6 may be below 0.1 %, for example 0.01 %, while the misinterpretation probability for the second and the third object 7, 16 may be in the order of several percent, for example 5 % or greater.

In step S4, the computing system 2 transmits the paths 8, 9, 10 as well as the environmental model and the misinterpretation probabilities for the objects 6, 7, 16 to the remote server 11. In step S5, the remote server 11 may receive said information.

In step S6, the proposed paths 8, 9, 10 along with the additional information comprised by the environmental model, the misinterpretation probabilities and, for example, camera data of the vehicle 1, may be displayed on the display device 13. An operator of the control center may select one of the proposed paths 8, 9, 10, based on the available information. In the present exemplary situation, the operator may, for example, select the first path 8, since the misinterpretation probability is particularly low for the first object 6 and the vehicle 1 can safely drive across the first object 6.

The operator may input information regarding the selection via an input device 14 and the remote server 11 may generate information regarding the selected path 8 based on the input in step S7.

The remote server computer 11 may transmit the information regarding the selected path 8 in step S8 to the computing system 2, which may receive the information in step S9.

In step S10, the computing system may control the vehicle 1 to automatically follow the first path 8.

In consequence, a full ToD session is avoided. Therefore, human resources as well as network resources may be saved.

According to several implementations of the improved concept, an automated vehicle, which gets into a situation where usually a ToD session is triggered. The computing system generates a set of proposed paths based on the manipulated or modified environmental model including paths that are apparently not possible and/or based on paths violating traffic rules and are usually not allowed. The vehicle sends the proposed paths together with the environmental model to the control center, which receives the data and may, optionally, obtain additional environmental data from a database and/or from an infrastructure and/or from the further vehicles. The operator of the control center decides, based on all available inputs, that the vehicle can either drive along one of the proposed paths or not. Hence, starting the ToD session may be avoided. If none of the proposed paths is suitable, the control center may initiate a normal ToD session.

### Reference numerals

- 1, 1a, 1b: vehicle
- 2, 2a, 2b: computing system
- 3, 3a, 3b: environmental sensor system
- 4: electronic vehicle guidance system
- 5, 5a, 5b: communication interface
- 6, 7: object
- 8, 9, 10: path
- 11: remote server computer
- 12: vehicle support system
- 13: display device
- 14: input device
- 15: network node
- 16: object

## Claims

1. Method for controlling an at least partly automated vehicle (1), wherein
- a vehicle computing system (2) of the vehicle (1) is used to generate an original environmental model; and
- the original environmental model contains an entry for an object (6) in an environment of the vehicle (1), the entry including a position of the object (1);
**characterized in that** the vehicle computing system (2) is used to
- modify the entry for the object (6) to generate a modified environmental model;
- generate at least one proposed path (8, 9, 10) for the vehicle (1) based on the modified environmental model, wherein a first path (8) of the at least one proposed path (8, 9, 10) interferes with the object (6) according to the original environmental model and the first path (8) does not interfere with the object (6) according to the modified environmental model;
- transmit the at least one proposed path (8, 9, 10) and the original environmental model to a remote computing unit (11);
- receive information concerning a selected path (8) of the at least one proposed path (8, 9, 10) from the remote computing unit (11); and
- control the vehicle (1) to drive along the selected path (8).

2. Method according to claim 1,
**characterized in that**
modifying the entry for the object (6) includes modifying the position of the object (6), deleting the entry of the object (6) or deleting a part of the entry of the object (6) or labelling the entry to highlight that the entry should be ignored or was ignored for generating the at least one proposed path (8, 9, 10).

3. Method according to one of claims 1 or 2,
**characterized in that**
a second path (10) of the at least one proposed path (8, 9, 10) is prohibited according to a predefined set of traffic rules.

4. Method according to one of claims 1 to 3,
**characterized in that**
the vehicle computing system (2) is used to remove the entry of the object (6) to generate the modified environmental model.

5. Method according to one of claims 1 to 4,
**characterized in that**
- an environmental sensor system (3) of the vehicle (1) is used to generate sensor data and the vehicle computing system (2) is used to generate the original environmental model based on the sensor data; and/or
- the vehicle computing system (2) is used to receive further sensor data from one or more further vehicles (1a, 1b) and to generate the original environmental model based on the further sensor data.

6. Method for supporting a control of an at least partly automated vehicle (1), wherein a remote computing unit (11) is used to receive an original environmental model from a vehicle computing system (2) of the vehicle (1), the original environmental model containing an entry for an object (6) in an environment of the vehicle (1), the entry including a position of the object (6);
**characterized in that** the remote computing unit (11) is used to:
- receive at least one proposed path (8, 9, 10) for the vehicle (1) from the vehicle computing system (2), the at least one proposed path (8, 9, 10) being based on a modified environmental model, wherein the entry for the object (6) is modified as compared to the original environmental model, wherein a first path (8) of the at least one proposed path (8, 9, 10) interferes with the object (6) according to the original environmental model and the first path (8) does not interfere with the object (6) according to the modified environmental model;
- generate information concerning a selected path (8) of the at least one proposed path (8, 9, 10); and
- transmit the information to the vehicle computing system (2).

7. Method for controlling an at least partly automated vehicle (1) according to one of claims 1 to 5, wherein the control is supported according to a method of claim 6.

8. Electronic vehicle guidance system for an at least partly automated vehicle (1), the vehicle guidance system (4) comprising a vehicle computing system (2), configured to generate an original environmental model, wherein the original environmental model contains an entry for an object (6) in an environment of the vehicle (1), the entry including a position of the object (6);
**characterized in that** the vehicle computing system (2) is configured to
- modify the entry for the object (6) to generate a modified environmental model;
- generate at least one proposed path (8, 9, 10) for the vehicle (1) based on the modified environmental model, wherein a first path (8) of the at least one proposed path (8, 9, 10) interferes with the object (6) according to the original environmental model and the first path (8) does not interfere with the object (6) according to the modified environmental model;
- transmit the at least one proposed path (8, 9, 10) and the original environmental model to a remote computing unit (11);
- receive information concerning a selected path (8) of the at least one proposed path (8, 9, 10) from the remote computing unit (1); and
- control the vehicle (1) to drive along the selected path (6).

9. System comprising an electronic vehicle guidance system according to claim 8 and a vehicle support system for supporting a control of an at least partly automated vehicle (1), the support system (12) comprising a remote computing unit (11), configured to
- receive the original environmental model from the vehicle computing system (2) of the vehicle (1);
- receive the at least one proposed path (8, 9, 10) for the vehicle (1) from the vehicle computing system (2);
- generate the information concerning the selected path (8) of the at least one proposed path (8, 9, 10); and
- transmit the information to the vehicle computing system (2).

10. Computer program product comprising instructions, wherein, when the instructions are executed by a computer system, the instructions cause the computer system to carry out a method according to one of claims 1 to 7.

## Patentansprüche

1. Verfahren zum Steuern eines zumindest teilweise automatisierten Fahrzeugs (1), wobei
- ein Fahrzeugrechensystem (2) des Fahrzeugs (1) verwendet wird, um ein ursprüngliches Umgebungsmodell zu erzeugen; und
- das ursprüngliche Umgebungsmodell einen Eintrag für einen Gegenstand (6) in einer Umgebung des Fahrzeugs (1) enthält, wobei der Eintrag eine Position des Gegenstands (1) enthält;
**dadurch gekennzeichnet, dass** das Fahrzeugrechensystem (2) verwendet wird zum:
- Modifizieren des Eintrags für den Gegenstand (6), um ein modifiziertes Umgebungsmodell zu erzeugen;
- Erzeugen mindestens eines vorgeschlagenen Weges (8, 9, 10) für das Fahrzeug (1) auf der Grundlage des modifizierten Umgebungsmodells, wobei ein erster Weg (8) des mindestens einen vorgeschlagenen Weges (8, 9, 10) gemäß dem ursprünglichen Umgebungsmodell mit dem Gegenstand (6) in Wechselwirkung tritt und der erste Weg (8) gemäß dem modifizierten Umgebungsmodell nicht mit dem Gegenstand (6) in Wechselwirkung tritt;
- Übertragen des mindestens einen vorgeschlagenen Weges (8, 9, 10) und des ursprünglichen Umgebungsmodells an eine entfernte Recheneinheit (11);
- Empfangen von Informationen, die einen ausgewählten Weg (8) aus dem mindestens einen vorgeschlagenen Weg (8, 9, 10) betreffen, von der entfernten Recheneinheit (11); und
- Steuern des Fahrzeugs (1), derart, dass es entlang des ausgewählten Weges (8) fährt.

2. Verfahren nach Anspruch 1,
**gekennzeichnet durch**
Modifizieren des Eintrags für den Gegenstand (6), das das Modifizieren der Position des Gegenstands (6) enthält, und
Löschen des Eintrags des Gegenstands (6) oder Löschen eines Anteils des Eintrags des Gegenstands (6) oder Kennzeichnen des Eintrags, um hervorzuheben, dass der Eintrag zum Erzeugen des mindestens einen vorgeschlagenen Weges (8, 9, 10) ignoriert werden sollte oder ignoriert wurde.

3. Verfahren nach einem der Ansprüche 1 oder 2,
**dadurch gekennzeichnet, dass**
ein zweiter Weg (10) des mindestens einen vorgeschlagenen Weges (8, 9, 10) gemäß einer vorgegebenen Gruppe von Verkehrsregeln verboten ist.

4. Verfahren nach einem der Ansprüche 1 bis 3,
**dadurch gekennzeichnet, dass**
das Fahrzeugrechensystem (2) verwendet wird, um den Eintrag des Gegenstands (6) zu entfernen, um das modifizierte Umgebungsmodell zu erzeugen.

5. Verfahren nach einem der Ansprüche 1 bis 4,
**dadurch gekennzeichnet, dass**
ein Umgebungssensorsystem (3) des Fahrzeugs (1) verwendet wird, um Sensordaten zu erzeugen, und das Fahrzeugrechensystem (2) verwendet wird, um das ursprüngliche Umgebungsmodell auf der Grundlage der Sensordaten zu erzeugen; und/oder
das Fahrzeugrechensystem (2) verwendet wird, um weitere Sensordaten von einem oder mehreren weiteren Fahrzeugen (1a, 1b) zu empfangen und das ursprüngliche Umgebungsmodell auf der Grundlage der weiteren Sensordaten zu erzeugen.

6. Verfahren zum Unterstützen einer Steuerung eines zumindest teilweise automatisierten Fahrzeugs (1), wobei eine entfernte Recheneinheit (11) verwendet wird, um ein ursprüngliches Umgebungsmodell von einem Fahrzeugrechensystem (2) des Fahrzeugs (1) zu empfangen, wobei das ursprüngliche Umgebungsmodell einen Eintrag für einen Gegenstand (6) in einer Umgebung des Fahrzeugs (1) enthält, wobei der Eintrag eine Position des Gegenstands (6) enthält;
**dadurch gekennzeichnet, dass** die entfernte Recheneinheit (11) verwendet wird zum:
- Empfangen mindestens eines vorgeschlagenen Weges (8, 9, 10) für das Fahrzeug (1) vom Fahrzeugrechensystem (2), wobei der mindestens eine vorgeschlagene Weg (8, 9, 10) auf einem modifizierten Umgebungsmodell beruht, wobei der Eintrag für den Gegenstand (6) verglichen mit dem ursprünglichen Umgebungsmodell modifiziert ist, wobei ein erster Weg (8) des mindestens einen vorgeschlagenen Weges (8, 9, 10) gemäß dem ursprünglichen Umgebungsmodell mit dem Gegenstand (6) in Wechselwirkung tritt und der erste Weg (8) gemäß dem modifizierten Umgebungsmodell nicht mit dem Gegenstand in Wechselwirkung tritt;
- Erzeugen von Informationen, die einen ausgewählten Weg (8) aus dem mindestens einen vorgeschlagenen Weg (8, 9, 10) betreffen; und
- Übertragen der Informationen an das Fahrzeugrechensystem (2).

7. Verfahren zum Steuern eines zumindest teilweise automatisierten Fahrzeugs (1) nach einem der Ansprüche 1 bis 5, wobei die Steuerung gemäß einem Verfahren nach Anspruch 6 unterstützt wird.

8. Elektronisches Fahrzeugführungssystem für ein zumindest teilweise automatisiertes Fahrzeug (1), wobei das Fahrzeugführungssystem (4) ein Fahrzeugrechensystem (2) umfasst, das konfiguriert ist, ein ursprüngliches Umgebungsmodell zu erzeugen, wobei das ursprüngliche Umgebungsmodell einen Eintrag für einen Gegenstand (6) in einer Umgebung des Fahrzeugs (1) enthält, wobei der Eintrag eine Position des Gegenstands (6) enthält;
**dadurch gekennzeichnet, dass** das Fahrzeugrechensystem (2) konfiguriert ist zum:
- Modifizieren des Eintrags für den Gegenstand (6), um ein modifiziertes Umgebungsmodell zu erzeugen;
- Erzeugen mindestens eines vorgeschlagenen Weges (8, 9, 10) für das Fahrzeug (1) auf der Grundlage des modifizierten Umgebungsmodells, wobei ein erster Weg (8) des mindestens einen vorgeschlagenen Weges (8, 9, 10) gemäß dem ursprünglichen Umgebungsmodell mit dem Gegenstand (6) in Wechselwirkung tritt und der erste Weg (8) gemäß dem modifizierten Umgebungsmodell nicht mit dem Gegenstand (6) in Wechselwirkung tritt;
- Übertragen des mindestens einen vorgeschlagenen Weges (8, 9, 10) und des ursprünglichen Umgebungsmodells an eine entfernte Recheneinheit (11);
- Empfangen von Informationen, die einen ausgewählten Weg (8) aus dem mindestens einen vorgeschlagenen Weg (8, 9, 10) betreffen, von der entfernten Recheneinheit (11); und
- Steuern des Fahrzeugs (1), derart, dass es entlang des ausgewählten Weges (8) fährt.

9. System, das ein elektronisches Fahrzeugführungssystem nach Anspruch 8 und ein Fahrzeugunterstützungssystem zum Unterstützen einer Steuerung eines zumindest teilweise automatisierten Fahrzeugs (1) umfasst, wobei das Unterstützungssystem (12) eine entfernte Recheneinheit (11) umfasst, die konfiguriert ist zum:
- Empfangen des ursprünglichen Umgebungsmodells vom Fahrzeugrechensystem (2) des Fahrzeugs (1);
- Empfangen des mindestens einen vorgeschlagenen Weges (8, 9, 10) für das Fahrzeug (1) vom Fahrzeugrechensystem (2);
- Erzeugen der Informationen, die den ausgewählten Weg (8) aus dem mindestens einen vorgeschlagenen Weg (8, 9, 10) betreffen; und
- Übertragen der Informationen an das Fahrzeugrechensystem (2).

10. Computerprogramm, das Anweisungen umfasst, wobei dann, wenn die Anweisungen durch ein Computersystem ausgeführt werden, die Anweisungen bewirken, dass das Computersystem ein Verfahren nach einem der Ansprüche 1 bis 7 ausführt.

## Revendications

1. Procédé pour commander un véhicule au moins partiellement automatisé (1),
- un système informatique de véhicule (2) du véhicule (1) étant utilisé pour générer un modèle environnemental original ; et
- ce modèle environnemental original contenant une entrée pour un objet (6) dans un environnement du véhicule (1), cette entrée comprenant une position de cet objet (1) ;
**caractérisé en ce que** le système informatique du véhicule (2) est utilisé pour
- modifier l'entrée pour l'objet (6) afin de générer un modèle environnemental modifié ;
- générer au moins un trajet proposé (8, 9, 10) pour le véhicule (1) en se basant sur le modèle environnemental modifié, un premier trajet (8) de l'au moins un trajet proposé (8, 9, 10) interférant avec l'objet (6) selon le modèle environnemental original et le premier trajet (8) n'interférant pas avec l'objet (6) selon le modèle environnemental modifié ;
- transmettre l'au moins un trajet proposé (8, 9, 10) et le modèle environnemental original à une unité informatique à distance (11) ;
- recevoir des informations concernant un trajet sélectionné (8) de l'au moins un trajet proposé (8, 9, 10) en provenance de l'unité informatique à distance (11) ; et pour
- commander le véhicule (1) pour qu'il se déplace le long du trajet sélectionné (8).

2. Procédé selon la revendication 1,
**caractérisé en ce que**
la modification de l'entrée pour l'objet (6) comprend la modification de la position de l'objet (6), la suppression de l'entrée de l'objet (6) ou la suppression d'une partie de l'entrée de l'objet (6) ou le marquage de l'entrée pour souligner que cette entrée devrait être ignorée ou a été ignorée pour générer l'au moins un trajet proposé (8, 9, 10).

3. Procédé selon une des revendications 1 ou 2, **caractérisé en ce que**
un deuxième trajet (10) de l'au moins un trajet proposé (8, 9, 10) est interdit selon un ensemble prédéfini de règles de la circulation.

4. Procédé selon une des revendications 1 à 3, **caractérisé en ce que**
le système informatique du véhicule (2) est utilisé pour enlever l'entrée de l'objet (6) afin de générer le modèle environnemental modifié.

5. Procédé selon une des revendications 1 à 4, **caractérisé en ce que**
- un système de détection d'environnement (3) du véhicule (1) est utilisé pour générer des données de détection et le système informatique du véhicule (2) est utilisé pour générer le modèle environnemental original en se basant sur ces données de détection ; et/ou
- le système informatique du véhicule (2) est utilisé pour recevoir d'autres données de détection provenant d'un ou de plusieurs autres véhicules (1a, 1b) et pour générer le modèle environnemental original en se basant sur ces autres données de détection.

6. Procédé pour soutenir une commande d'un véhicule au moins partiellement automatisé (1), une unité informatique à distance (11) étant utilisée pour recevoir un modèle environnemental original en provenance d'un système informatique de véhicule (2) du véhicule (2), ce modèle environnemental original contenant une entrée pour un objet (6) dans un environnement du véhicule (1), cette entrée comprenant une position de l'objet (6) ;
**caractérisé en ce que** l'unité informatique à distance (11) est utilisée pour
- recevoir au moins un trajet proposé (8, 9, 10) pour le véhicule (1) en provenance du système informatique du véhicule (2), cet au moins un trajet proposé (8, 9, 10) étant basé sur un modèle environnemental modifié, l'entrée pour l'objet (6) étant modifiée comme comparée au modèle environnemental original, un premier trajet (8) de l'au moins un trajet proposé (8, 9, 10) interférant avec l'objet (6) selon le modèle environnemental original et ce premier trajet (8) n'interférant pas avec l'objet (6) selon le modèle environnemental modifié ;
- générer des informations concernant un trajet sélectionné (8) de l'au moins un trajet proposé (8, 9, 10) ; et pour
- transmettre ces informations au système informatique du véhicule (2).

7. Procédé pour commander un véhicule au moins partiellement automatisé (1) selon une des revendications 1 à 5, dans lequel la commande est soutenue conformément à un procédé selon la revendication 6.

8. Système électronique de guidage de véhicule pour un véhicule au moins partiellement automatisé (1), ce système de guidage de véhicule (4) comprenant un système informatique de véhicule (2), configuré de façon à générer un modèle environnemental original, ce modèle environnemental original contenant une entrée pour un objet (6) dans un environnement du véhicule (1), cette entrée comprenant une position de cet objet (6) ;
**caractérisé en ce que** le système informatique du véhicule (2) est configuré de façon à
- modifier l'entrée pour l'objet (6) afin de générer un modèle environnemental modifié ;
- générer au moins un trajet proposé (8, 9, 10) pour le véhicule (1) en se basant sur le modèle environnemental modifié, un premier trajet (8) de l'au moins un trajet proposé (8, 9, 10) interférant avec l'objet (6) selon le modèle environnemental original et ce premier trajet (8) n'interférant pas avec l'objet (6) selon le modèle environnemental modifié ;
- transmettre l'au moins un trajet proposé (8, 9, 10) et le modèle environnemental original à une unité informatique à distance (11) ;
- recevoir des informations concernant un trajet sélectionné (8) de l'au moins un trajet proposé (8, 9, 10) en provenance de l'unité informatique à distance (11) ; et de façon à
- commander le véhicule (1) pour qu'il se déplace le long du trajet sélectionné (6).

9. Système comprenant un système électronique de guidage de véhicule selon la revendication 8 et un système de soutien de véhicule pour soutenir une commande d'un véhicule au moins partiellement automatisé (1), ce système de soutien (12) comprenant une unité informatique à distance (11), configurée de façon à
- recevoir le modèle environnemental original en provenance du système informatique de véhicule (2) du véhicule (1) ;
- recevoir l'au moins un trajet proposé (8, 9, 10) pour le véhicule (1) en provenance du système informatique du véhicule (2) ;
- générer les informations concernant le trajet sélectionné (8) de l'au moins un trajet proposé (8, 9, 10) ; et de façon à
- transmettre les informations au système informatique du véhicule (2).

10. Progiciel comprenant des instructions, ces instructions, lorsqu'elles sont exécutées par un système informatique, faisant exécuter à ce système informatique un procédé selon une des revendications 1 à 7.
